# EUROPÄISCHE PATENTSCHRIFT

(11) **EP 2 536 021 B1**
(45) Veröffentlichungstag und Bekanntmachung des Hinweises auf die Patenterteilung: **23.10.2019**
(21) Anmeldenummer: 12004378.1
(22) Anmeldetag: 09.06.2012
(51) Int. Cl.: H02P 6/00

(54) **Akkubetriebener Elektromotor in einem Arbeitsgerät**
Battery-powered electric motor in a work device
Moteur électrique fonctionnant sur batterie dans un appareil de travail

(30) Priorität: 16.06.2011 DE 102011106578
(43) Veröffentlichungstag der Anmeldung: 19.12.2012
(73) Patentinhaber: Andreas Stihl AG & Co. KG, 71336 Waiblingen (DE)
(72) Erfinder: Wichert, Réne, 73568 Durlangen (DE); Liebhard, Gernot, 71332 Waiblingen (DE); Sämann, Rudolf, 72336 Balingen (DE)
(74) Vertreter: Wasmuth, Rolf

(56) Entgegenhaltungen:
- EP-A1- 1 796 258
- DE-A1- 3 706 306
- DE-A1- 10 231 450
- DE-A1-102004 062 821
- DE-A1-102009 001 271

## Beschreibung

Die Erfindung betrifft einen Elektromotor als Antriebsmotor in einem Arbeitsgerät, insbesondere in einem handgeführten Arbeitsgerät wie einer elektrischen Motorkettensäge, einer elektrischen Heckenschere, einem elektrischen Freischneider, einem elektrischen Blasgerät, einem elektrischen Trennschleifer oder dgl..

Akkubetriebene Gleichstrommotoren finden vermehrt Anwendung als Antrieb in handgetragenen Arbeitsgeräten wie z. B. Motorkettensägen, Heckenscheren, Freischneidern, Blasgeräten, Trennschleifern oder dgl..

Um leichte, leistungsstarke Elektromotoren einsetzen zu können, muss ein erheblicher elektronischer Aufwand betrieben werden. Die Elektromotoren werden nahe ihrem maximalen Leistungsbereich betrieben, weshalb ausgeklügelte elektronische Überwachungen genutzt werden, mit denen eine elektrische Überlastung des Motors ebenso vermieden wird wie eine Überlastung der genutzten Leistungselektronik. Hierzu müssen eine Vielzahl von Betriebsdaten des Elektromotors erfasst und - meist mit Mikroprozessoren - ausgewertet werden. Jedes Signal wird hierzu einem Eingang des Prozessors zugeführt, weshalb ein Prozessor eine Vielzahl von insbesondere analogen Eingängen haben muss, um alle Signale angepasst zu verarbeiten. Prozessoren mit einer Vielzahl von Eingängen, insbesondere analogen Eingängen sind kostenintensiv und platzintensiv.

Werden elektronisch kommutierte Elektromotoren verwendet, müssen zum Anlaufen definierte Startbedingungen gegeben sein, damit das elektronisch kommutierte Drehfeld den Rotor in die vorgesehene Drehrichtung antreibt. Auch sind definierte Betriebsbedingungen beim Hochlaufen des Motors auf Betriebsdrehzahl notwendig. Es muss gewährleistet sein, dass der Rotor dem schneller werdenden Drehfeld sicher folgen kann. So kann der Motor durch Hochrampen nach fest vorgegebenen Schaltschemata während des Hochlaufs betrieben werden. Um ein sicheres Hochlaufen eines elektronisch kommutierten Elektromotors zu gewährleisten, sind z. B. Stellungssensoren angeordnet, die die Drehlage des Rotors erfassen und an die elektronische Steuereinheit des Motors melden. So werden z. B. Hallsensoren eingesetzt, mit denen gewährleistet werden kann, dass das Drehfeld immer der Drehlage des Rotors angepasst geschaltet ist. Ist die Betriebsdrehzahl erreicht, erfolgt die Steuerung des Drehfeldes anhand der im Motor in den Feldwicklungen des Stators induzierten Spannungen, deren Größe und Richtung ein sicheres Steuern des elektronisch kommutierten Elektromotors im Bereich der Betriebsdrehzahl gewährleistet.

Neben der generatorischen Spannung des drehenden Elektromotors werden auch andere Betriebssignale erfasst, z. B. der Laststrom, der ebenfalls zur Steuerung des Drehfeldes herangezogen werden kann. Da die Generatorspannung im Voltbereich liegt und die einen Laststrom wiedergebende Lastspannung im Millivolt-Bereich, müssen die Betriebssignale getrennt verarbeitet und der Steuereinheit zugeführt werden.

Aus der DE 10 2004 062 821 A1 ist eine Schaltungsanordnung zur geberlosen Ermittlung der Rotorposition eines bürstenlosen Motors und zu dessen Betrieb bekannt. Der Motor umfasst einen permanentmagnetisch erregten Rotor und eine im Stern geschaltete, dreiphasige Ankerwicklung. Die Schaltungsanordnung weist eine Schaltvorrichtung zum sukzessiven Bestromen der Ankerwicklungen in Abhängigkeit der Rotorposition auf. Das Triggersignal zum Ansteuern der Ankerwicklung wird dabei aus der in den einzelnen Phasen induzierten Spannung abgeleitet und als zeitliches Kriterium für die Erzeugung der Kommutierungssignale genutzt.

Der elektronische Aufwand zum Betrieb eines elektronisch kommutierten Motors ist erheblich; die verwendeten Mikroprozessoren verarbeiten bereits eine Vielzahl von zugeführten Signalen, weshalb die Nutzung weiterer Betriebssignale des Motors oft problematisch oder ohne Ersatz des Prozessors durch einen größeren und kostenintensiveren Prozessor mit mehr analogen Eingängen nicht möglich ist.

Der Erfindung liegt die Aufgabe zugrunde, die für den störungsfreien Betrieb eines Elektromotors auszuwertenden Betriebssignale der Steuereinheit des Motors mit geringem Schaltungsaufwand zur Verfügung zu stellen.

Die Aufgabe wird erfindungsgemäß nach den Merkmalen des Anspruchs 1 gelöst.

Der Elektromotor umfasst eine Anordnung aus Feldwicklungen zum elektromotorischen Antrieb des Rotors, wobei die Feldwicklungen nacheinander abwechselnd mit einer Energiequelle derart verbunden sind, dass ein den Rotor antreibendes Drehmoment wirkt. Am jeweiligen Wicklungsstrang ist ein Potenzialpunkt vorgesehen, dessen Spannung über eine Anpassungsvorrichtung einem Eingang einer Auswerteeinheit zugeführt ist. Die Anpassungsvorrichtung ist umschaltbar und in zwei Anpassungsstufen zu betreiben. Zur Umschaltung ist eine in Abhängigkeit von der Drehlage des Rotors arbeitende Ansteuerschaltung vorgesehen, die in Abhängigkeit der Drehlage des Rotors des Elektromotors die Anpassungsvorrichtung in eine erste Anpassungsstufe hoher Empfindlichkeit oder in eine zweite Anpassungsstufe mit niedriger Empfindlichkeit schaltet. Dadurch ist gewährleistet, dass die sehr hohe Generatorspannung des drehenden Elektromotors über ein und denselben - zweckmäßig analogen - Eingang der Auswerteeinheit aufgeschaltet werden kann wie die im Lastfall am Potenzialpunkt abgreifbare Lastspannung, die um Potenzen kleiner sein kann als die Generatorspannung. Der Potenzialpunkt ist - mittels der Anpassungsvorrichtung - über nur eine Leitung mit nur einem analogen Eingang der Auswerteeinheit verbunden. Dadurch kann als Auswerteeinheit ein einfach aufgebauter Prozessor mit nur wenigen analogen Eingängen zum Einsatz kommen, der kostengünstig ist, kompakt ist und einen nur geringen Stromverbrauch hat. Die Anpassungsvorrichtung wird immer dann aus der ersten Anpassungsstufe mit z. B. hoher Empfindlichkeit in die zweite Anpassungsstufe mit z. B. niedriger Empfindlichkeit umgeschaltet, wenn das Potenzial am Potenzialpunkt von der Lastspannung auf die Generatorspannung wechselt. Durch die Anpassungsvorrichtung, die erfindungsgemäß von der Ansteuerschaltung drehlagerichtig umgeschaltet wird, können mit geringem Schaltungsaufwand stark unterschiedliche Signale auf einer Signalleitung übermittelt und auf nur einen einzigen Eingang aufgeschaltet werden.

Zur drehlagerichtigen Umschaltung der Anpassungsvorrichtung in Abhängigkeit des Potenzials am Potenzialpunkt ist vorgesehen, dass die Ansteuerschaltung die Drehlage des Rotors aus den Signalen von Drehlagesensoren ermittelt, die am Elektromotor angeordnet sind. Eine Information über die Drehlage ergibt sich auch über den Kommutator des Elektromotors, so dass die Ansteuerschaltung die Drehlage des Rotors alternativ auch über den Kommutator des Elektromotors ermitteln kann. Wird anstelle eines mechanischen Drehkommutators ein elektronischer Kommutator verwendet, wie er bei EC-Motoren eingesetzt wird, kann die Ansteuerschaltung die Drehlage des Rotors auch aus den Steuersignalen des elektronischen Kommutators ermitteln. Vorteilhaft ist die Ansteuerschaltung derart ausgebildet, dass sie Teil des elektronischen Kommutators oder seiner Steuereinheit ist.

In einfacher Weise kann die Drehlage des Rotors auch aus der am Potenzialpunkt abgegriffenen generatorischen Spannung ermittelt werden. Aus dem Verlauf der generatorischen Spannung am Potenzialpunkt kann die Drehlage des Rotors abgeleitet werden. Dies kann z. B. durch Auswerten der Nulldurchgänge des Spannungssignals erfolgen. Das ausgewertete Spannungssignal an dem einen Potenzialpunkt eines ersten Stromkreises (erster Kanal) kann auch dazu benutzt werden, die an den anderen Stromkreisen (zweiter und dritter Kanal) angeschlossenen Anpassungsvorrichtungen drehlagegerecht zu schalten. So ist eine drehlagegerechte Steuerung der an die Stromkreise angeschlossenen Anpassungsvorrichtungen allein durch geeignete Auswertung der an den Potenzialpunkten abgegriffenen generatorischen Spannungen möglich.

Insbesondere besteht die Anordnung aus mindestens zwei Wicklungen mit entsprechenden Phasenanschlüssen, wobei die Phasenanschlüsse der Wicklungen über einen Kommutator nacheinander mit der Energiequelle derart verbunden sind, dass ein fortschreitendes Drehfeld erzeugt ist. Wird die eine Wicklung bestromt, kann an einem freien Phasenanschluss einer anderen Wicklung die generatorische Spannung des drehenden Elektromotors abgegriffen werden. Der Strom durch die das Drehfeld erzeugenden Wicklung wird als an einem Widerstand abfallende Spannung erfasst, wobei diese abfallende Spannung und die generatorische Spannung als Betriebssignale der Auswerteeinheit zugeführt sind.

Vorteilhaft weist die Anordnung der Feldwicklungen drei Phasenanschlüsse auf, wobei je zwei Phasenanschlüsse der Feldwicklungen über einen elektronisch gesteuerten Kommutator nacheinander mit der Energiequelle derart verbunden sind, dass ein fortschreitendes Drehfeld erzeugt ist. Zeitgleich ist ein erster Phasenanschluss über ein erstes Schaltelement mit der Lowside der Energiequelle verbunden, wobei an dem freien dritten Phasenanschluss die generatorische Spannung des drehenden Elektromotors anliegt. Der Spannungsabfall über eines der die Schaltelemente mit der Energiequelle verbindenden Phasenanschlüsse ist über einen Phasenanschluss abgreifbar, der vorteilhaft einen Potenzialpunkt bildet, wobei diese Spannungen als Betriebssignale der Auswerteeinheit zugeführt sind.

Die an einem Phasenanschluss abzugreifenden Betriebssignale wie eine Lastspannung und eine induzierte Generatorspannung werden über eine gemeinsame Anpassungsvorrichtung der Auswerteeinheit zugeführt, so dass nur ein Eingang für beide Betriebssignale erforderlich ist. Zur Umschaltung der Anpassungsvorrichtung ist vorgesehen, dass bei Anliegen eines von einer Steuereinheit an den elektronischen Kommutator abgegebenen Steuersignals aus einer ersten Anpassungsstufe in eine zweite Anpassungsstufe umgeschaltet wird, wobei das Steuersignal in Abhängigkeit des Schaltzustandes der Schaltelemente ausgelöst wird, die zwischen den Phasenanschlüssen und der Energiequelle angeordnet sind. Die Nutzung der die Schaltelemente des Kommutators umschaltenden Steuersignale zur Umschaltung der Anpassungsvorrichtung ist einfach auszuführen und gewährleistet eine drehlagegenaue Umschaltung von der einen Anpassungsstufe in die andere und umgekehrt.

Die mit einem Phasenanschluss verbundene Anpassungsstufe wird immer dann auf die zweite Anpassungsstufe umgeschaltet, wenn die Schaltelemente offen sind, die den Phasenanschluss, an den die Anpassungsstufe angeschlossen ist, mit der Versorgungsspannung verbinden. Da die Steuereinheit die Schaltelemente steuert, kann die Steuereinheit in einfacher Weise auch die Anpassungsvorrichtungen steuern, da die hierfür notwendigen Signale ohnehin zum Betrieb des Kommutators zur Verfügung stehen.

In einer einfachen Ausführung ist eine Anpassungsvorrichtung durch einen Spannungsteiler gebildet, der über eine Schalteinrichtung ein- und ausschaltbar ist. Der Spannungsteiler liegt am Eingang der Anpassungsvorrichtung und wird immer dann aktiviert, wenn am Phasenanschluss die generatorische Spannung des drehenden Elektromotors anliegt.

Vorteilhaft umfasst die Anpassungsvorrichtung einen Operationsverstärker, auf dessen analogen Eingang die an einem Potenzialpunkt abgegriffenen Betriebssignale aufgeschaltet sind.

In besonderer Weiterbildung der Erfindung umfasst die Auswerteeinheit einen Mikroprozessor, in dem die Anpassungsvorrichtung integriert ist.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: in schematischer Darstellung ein Prinzipschaltbild zur Auswertung der an einem Potenzialpunkt anliegenden Spannungen,
- Fig. 2: eine schematische Darstellung eines handgeführten Arbeitsgerätes am Beispiel einer Heckenschere,
- Fig. 3: in schematischer Darstellung einen bürstenlosen Gleichstrommotor mit Prinzipschaltbild einer elektronischen Steuereinheit zur Kommutierung,
- Fig. 4: in schematischer Darstellung eine Anpassungsvorrichtung auf Basis eines Spannungsteilers,
- Fig. 5: eine schematische Darstellung des bürstenlosen Gleichstrommotors mit Kommutierung in einer Position I,
- Fig. 6: eine Darstellung entsprechend Fig. 5 mit um etwa 30° in Drehrichtung gedrehtem Rotor,
- Fig. 7: eine Tabelle der Bestromung der Phasenanschlüsse zur Drehkommutierung.

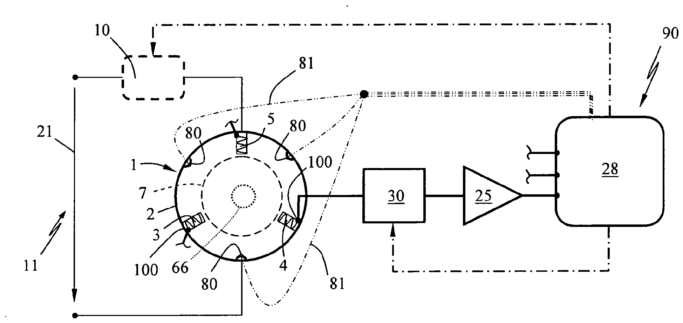

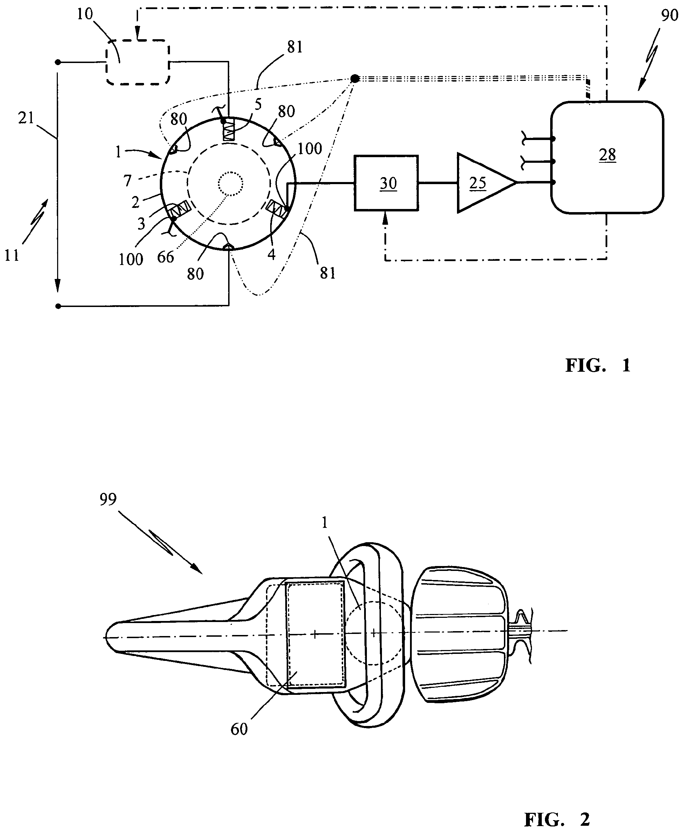

In Fig. 1 ist anhand einer schematischen Darstellung das Prinzip der erfinderischen Idee wiedergegeben. In einem Stator 2 eines Elektromotors 1 dreht ein Rotor 7, wobei der Elektromotor 1 ein DC-Motor (Gleichstrommotor) mit oder ohne Bürsten bzw. Kohlen sein kann. Die dargestellte Energiequelle 11 ist ein Akkublock 60 (Fig. 2) und stellt als Versorgungsspannung 21 eine Gleichspannung zur Verfügung; zweckmäßig wird abhängig vom Ladezustand des Akkublocks eine Nennspannung von 36 bis 42 V bereitgestellt.

Der Stator 2 des Elektromotors 1 weist eine Vielzahl von Wicklungen 3, 4, 5 zur Erzeugung eines Drehfeldes auf, welches auf den Rotor 7 ein antreibendes Drehmoment 24 ausübt. In einer einfachen Ausfuhrungsform eines DC-Motors wird die Versorgungsspannung 11 über einen mechanischen Kommutator 66 auf die Wicklungen 3, 4, 5 aufgeschaltet, wobei der Kommutator 66 mit Drehung des Rotors 7 nur die der jeweiligen Drehlage zugeordneten Wicklungen bestromt, wodurch der Rotor 7 in Drehrichtung angetrieben wird. Der Strom durch eine Wicklung kann durch einen Messwiderstand (Shunt-Widerstand) in jedem Stromkreis oder durch den Innenwiderstand eines im Stromkreis liegenden elektrischen Schalters erfasst werden, wozu die an ihm abfallende Spannung abgegriffen und ausgewertet wird. Hierzu ist an geeigneter Stelle ein Potenzialpunkt 100 am Stromkreis einer Wicklung vorgesehen. Die Lastspannung U_{L} des Potenzialpunktes 100 wird über eine Anpassungsvorrichtung 30 - und zweckmäßig einen Operationsverstärker 25 - einer Auswerteeinheit, z. B. einem Mikroprozessor 28 zugeführt. In der Darstellung ist ein Potenzialpunkt 100 über die Anpassungsvorrichtung 30 an die Auswerteeinheit angeschlossen; der Anschluss der Potenzialpunkte 100 der anderen Wicklungsstränge ist nur angedeutet.

Ist in einer Drehlage des Rotors 7 eine andere Wicklung 3, 4, 5 nicht bestromt, kann an dem gleichen Potenzialpunkt 100 die Generatorspannung U_{G} abgegriffen werden, die meist um ein Vielfaches größer ist als die Lastspannung U_{L}. Die Größe der Generatorspannung U_{G} ist proportional der Drehzahl des Rotors 7. Nach der Erfindung wird diese Generatorspannung U_{G} über den Potenzialpunkt 100 abgegriffen und über den gleichen Anschluss auf den Mikroprozessor 28 aufgeschaltet wie die Lastspannung U_{L}. Die Generatorspannung U_{G} wird über die Anpassungsvorrichtung 30 - und zweckmäßig einen Operationsverstärker 25 - der Auswerteeinheit, nämlich dem Mikroprozessor 28 zugeführt.

Da die am Potenzialpunkt 100 abgegriffenen Spannungen U_{L} und U_{G} in der Größe stark unterschiedlich sind und außerhalb der Spannungsbandbreite einer zulässigen Eingangsspannung am Eingang eines Mikroprozessors 28 liegen können, ist die Anpassungsvorrichtung 30 vorgesehen. Diese Anpassungsvorrichtung 30 arbeitet vorteilhaft in einer ersten Anpassungsstufe insbesondere verstärkend und in einer zweiten Anpassungsstufe abschwächend oder mit einer geringeren bzw. keiner Verstärkung. Liegt die relative kleine Lastspannung U_{L} an, wird die Anpassungsvorrichtung in Anpassungsstufe eins betrieben; liegt die größere Generatorspannung U_{G} an, wird die Anpassungsvorrichtung 30 in Anpassungsstufe zwei betrieben. Auf diese Weise können an nur einem analogen Eingang eines Prozessors zwei Eingangssignale verarbeitet werden, deren Wert bzw. deren Amplitude stark unterschiedlich ist..

Abgegriffen werden die beiden, Betriebsparameter des Elektromotors 1 wiedergebenden Spannungen U_{L} und U_{G} an dem gleichen Potenzialpunkt 100, weshalb die Anpassungsvorrichtung 30 geeignet angesteuert werden muss. Da die Art der am Potenzialpunkt 100 abgegriffenen Spannung (Lastspannung oder Generatorspannung) abhängig von der Drehlage des Rotors bzw. von der Drehlage des antreibenden Drehfeldes ist, ist eine Ansteuerschaltung 90 vorgesehen, die im gezeigten Ausführungsbeispiel vom Mikroprozessor 28 gebildet oder in ihn integriert ist.

In einer einfachen Ausgestaltung werden Drehlagesensoren 80, zweckmäßig Hallsensoren über den Umfang des Rotors 7 angeordnet; im Ausführungsbeispiel nach Figur 1 sind drei Hallsensoren vorgesehen, deren Signalleitungen 81 mit der Ansteuerschaltung 90 verbunden sind. Immer wenn nach der Drehlage des Rotors 7 eine der Wicklungen 3, 4, 5 stromlos ist und an deren Potenzialpunkt 100 die Generatorspannung U_{G} abgegriffen werden kann, gibt die Ansteuerschaltung 90 ein Schaltsignal an die Anpassungsvorrichtung 30, durch welches diese auf die Anpassungsstufe zwei mit niedriger Empfindlichkeit umschaltet. Das angepasste Generatorsignal liegt so innerhalb der Eingangssignalbandbreite des Mikroprozessors 28. Abweichend von dieser Drehlage fließt ein das Drehfeld erzeugender Strom, und am Potenzialpunkt 100 kann die Lastspannung U_{L} abgegriffen werden; die Ansteuerschaltung 90 schaltet die Anpassungsvorrichtung 30 auf die Stufe eins mit hoher Empfindlichkeit; die abgegriffene Lastspannung U_{L} wird innerhalb der Eingangssignalbandbreite des Eingangs des Mikroprozessors 28 vorteilhaft verstärkt.

Die Ansteuerschaltung 90 kann auch durch den Kommutator des Elektromotors 1 betrieben werden. Wird ein mechanischer Kommutator 66 verwendet, kann dessen Drehlage abgetastet und die Ansteuerschaltung 90 entsprechend betrieben werden. Wird ein elektronischer Kommutator 10 genutzt - z. B. bei bürstenlosen, elektronisch kommutierten Gleichstrommotoren (EC-Motor) -, können die Ansteuersignale des Kommutators 10 unmittelbar der Ansteuerschaltung 90 zugeführt werden, da die Ansteuersignale unmittelbar eine Aussage über die Drehlage des Rotors 7 zulassen, wie nachstehend am Beispiel eines elektronisch kommutierten Elektromotors 1 im Einzelnen beschrieben ist. Durch diese Art der Ansteuerung der Ansteuerschaltung 90 können Drehlagesensoren 80 am Motor entfallen.

In einfacher Weise kann die Drehlage des Rotors 7 auch dadurch bestimmt werden, indem die am Potenzialpunkt 100 abgegriffene generatorische Spannung U_{G} ausgewertet wird. Dies kann z. B. durch Auswerten der Nulldurchgänge des Spannungssignals erfolgen, woraus die momentane Ist-Drehlage des Rotors 7 abgeleitet werden kann. Dabei kann das Signal der generatorischen Spannung U_{G} an dem einem Potenzialpunkt 100 eines ersten Stromkreises (erster Kanal) dazu benutzt werden, die an den anderen Stromkreisen (zweiter und dritter Kanal) angeschlossenen Anpassungsvorrichtungen drehlagegerecht zu schalten. So ist eine drehlagegerechte Steuerung der an die Stromkreise angeschlossenen Anpassungsvorrichtungen 30, 40, 50 allein aus den an den Potenzialpunkten 100 abgegriffenen generatorischen Spannungen U_{G} möglich.

Figur 2 zeigt am Beispiel einer elektrischen Heckenschere ein handgeführtes, insbesondere tragbares Arbeitsgerät 99, dessen Elektromotor 1 von einem Akkublock 60 gespeist ist. Das gezeigte Arbeitsgerät 99 ist beispielhaft und könnte auch eine elektrische Motorkettensäge, ein elektrischer Freischneider, ein elektrisches Blasgerät, ein elektrischer Trennschleifer oder dgl. sein. Als handgeführtes Arbeitsgerät wird auch ein Rasenmäher oder dgl. Gartengerät verstanden.

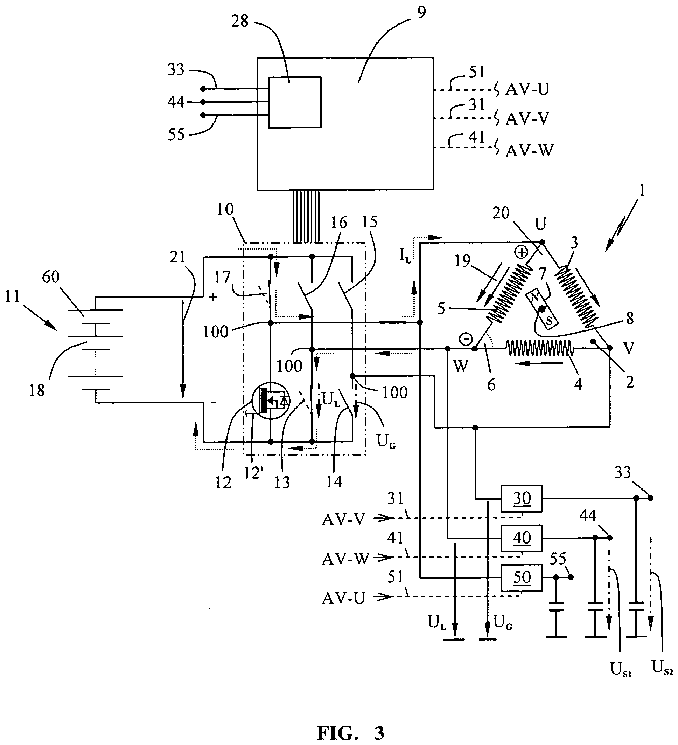

In Fig. 3 ist schematisch ein elektronisch kommutierter Elektromotor 1 dargestellt, der einen sogenannten Brushless-Motor bildet. Ein derartiger elektronisch kommutierter Elektromotor (EC-Motor) besteht aus einem Stator 2 mit einer Anordnung 20 aus Feldwicklungen 3, 4, 5, die in einer Dreieckschaltung elektrisch miteinander verschaltet sind. Die Dreieckschaltung ist beispielhaft genannt; eine Sternschaltung kann ebenfalls zweckmäßig sein.

Im gezeigten Ausführungsbeispiel liegen die Feldwicklungen 3, 4, 5 in einem Winkel 6 von 60° räumlich versetzt zueinander. Jeweils zwei Enden der Feldwicklungen 3, 4, 5 sind elektrisch miteinander verbunden und bilden jeweils Phasenanschlüsse U, V und W des Motors.

Dem Stator 2 ist ein Rotor 7 zugeordnet, der um eine Drehachse 8 dreht. Im gezeigten Ausführungsbeispiel ist der Rotor 7 in einer einfachsten Bauart in Form eines Permanentmagneten mit einem Nordpol N und einem Südpol S wiedergegeben. Der Rotor 7 kann als im Stator 2 laufender Rotor 7 ausgebildet sein; der Rotor 7 kann auch topfförmig gestaltet sein und den Stator 2 mit den Feldwicklungen 3, 4, 5 übergreifen. Ein derartiger Motor ist ein sogenannter Außenläufer.

Der Elektromotor 1 wird aus einer Energiequelle 11 über einen elektronischen Kommutator 10 mit Spannung bzw. Strom versorgt, wobei die Energiequelle 11 vorzugsweise aus einem Akkublock 60 aus in Reihe und/oder parallel geschalteten Einzelzellen 18 besteht. Die Einzelzellen 18 sind bevorzugt chemisch auf Lithium basierende Zellen, z. B. Lithium-Ionen-, Lithium-Polymer-, Lithium-Eisen- oder dgl. Zellen. Der Akkublock 60 stellt eine Gleichspannung von z. B. 40 Volt zur Verfügung.

Die Reihenschaltung der Einzelzellen 18 des Akkublocks 60 stellt eine Versorgungsspannung 21, nämlich eine Gleichspannung zur Verfügung, die über einen Spannungssteller stabilisiert sein kann.

Zur elektronischen Kommutierung ist jeder Phasenanschluss U, V und W über je zwei Schaltelemente 12, 17; 13, 16; 14, 15 mit der Versorgungsspannung 21 verbindbar. Wie Fig. 3 schematisch zeigt, ist der Phasenanschluss U über das Schaltelement 17 mit dem Pluspotenzial und über das Schaltelement 12 mit dem Minuspotenzial der Energiequelle 11 verbunden. Entsprechend ist der Phasenanschluss W über das Schaltelement 16 mit dem Pluspotenzial und das Schaltelement 13 mit dem Minuspotenzial verbunden. Der dritte Phasenanschluss V ist über das Schaltelement 15 mit dem Pluspotenzial und über das Schaltelement 14 mit dem Minuspotenzial der Energiequelle 11 verbunden.

Die Schaltelemente 12 bis 17 sind bevorzugt elektronische Schalter wie z. B. MOSFETs, Thyristoren oder dgl. elektronische Leistungsschalter. Sie werden von einer elektronischen Steuereinheit 9 gesteuert, welche das durch die Feldwicklungen 3, 4, 5 der Anordnung 20 gebildete Drehfeld in Drehrichtung des Rotors 7 fortschreitend weiterschaltet. Im gezeigten Ausführungsbeispiel ist die Bestromung der Feldwicklung 5 dargestellt; der Phasenanschluss U ist über das Schaltelement 17 mit dem Pluspotenzial der Versorgungsspannung 21 verbunden; der Phasenanschluss W über das Schaltelement 13 mit dem Minuspotenzial der Versorgungsspannung 21. Dadurch bildet sich in der Feldwicklung 5 ein drehmomentbildender Kommutatorstrom aus, was mit dem Doppelpfeil 19 dargestellt ist. Über die beiden parallel zur Feldwicklung 5 liegenden Feldwicklungen 3 und 4 fließt ein halb so großer Strom, der keinen größeren Anteil am Drehmoment hat.

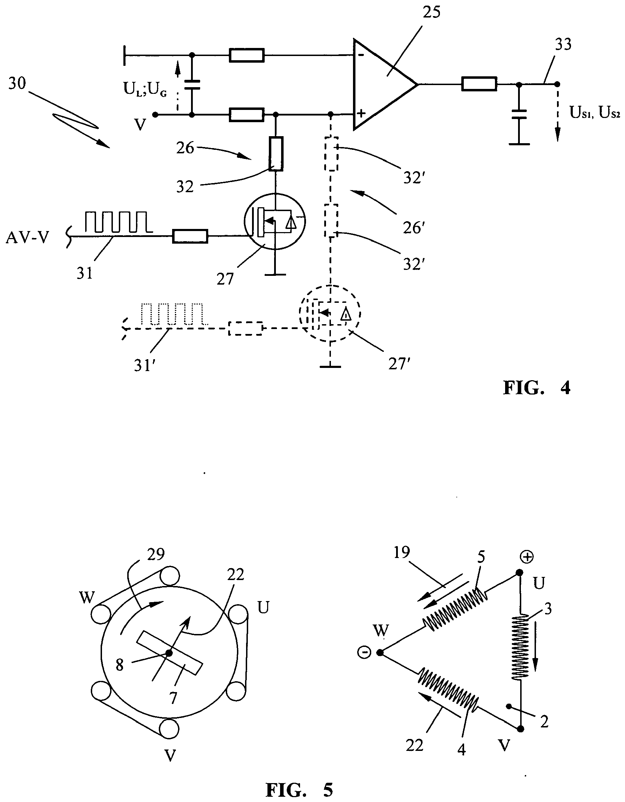

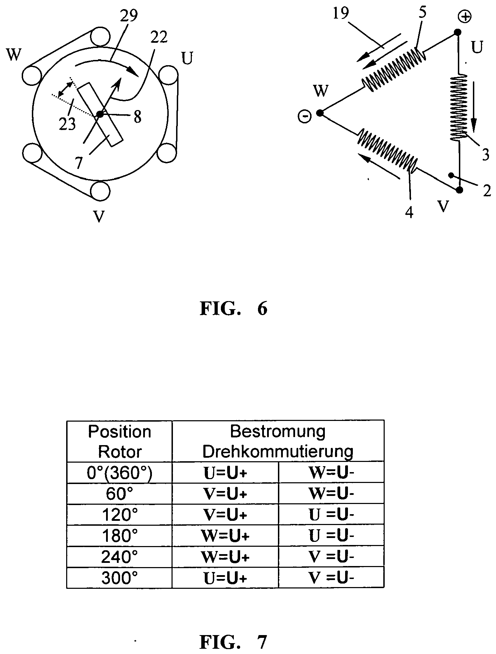

Das Hochlaufen eines bürstenlosen Motors bis zu einer Betriebsdrehzahl muss derart erfolgen, dass das magnetische Drehfeld des Statorstroms beschleunigend auf den Rotor 7 wirkt. Dies setzt zunächst voraus, dass im Zeitpunkt des Startes des Elektromotors 1 die Stellung des Rotors 7 zum Stator 2 bekannt ist; hierzu können in bekannter Weise bei stehendem Rotor 7 die Induktivitäten der einzelnen Feldwicklung gemessen und miteinander verglichen werden. Anhand der ermittelten Ergebnisse ist die Drehlage des Rotors 7 zu bestimmen. Ist die Drehlage bekannt, wird die erste, der ermittelten Drehlage des Rotors 7 entsprechende Feldwicklung 3, 4 oder 5 über den Kommutator 10 durch Schließen der entsprechenden Schaltelemente 12 bis 17 bestromt, so dass der Rotor 7 sich in Drehrichtung 29 (Fig. 5) bewegt. Entsprechend der Position 0° in der Tabelle nach Fig. 7 ist bezogen auf diese Rotorposition die Versorgungsspannung 21 zwischen den Phasenanschlüssen U und W der Feldwicklung 5 angelegt, wodurch sich ein durch den Pfeil 22 in Fig. 5 dargestelltes Drehfeld aufbaut. Der Rotor 7 wird dem Drehfeld folgend in Drehrichtung 29 angetrieben.

In der Darstellung nach Fig. 6 hat sich der Rotor 7 um einen Winkel 23 von etwa 30° in Drehrichtung 29 bewegt; das durch den Pfeil 22 dargestellte Drehfeld ist zunächst unverändert, da weiterhin die Feldwicklung 5 des Stators 2 unmittelbar bestromt ist. Je weiter sich der Rotor 7 dreht, desto geringer wird das antreibende Drehmoment des Drehfeldes. Um eine permanent antreibende Kraft zu gewährleisten, muss daher die Umschaltung der Feldwicklungen auf die Position 60° (Tabelle Fig. 7) entsprechend der aktuellen Lage des Rotors 7 zeitgerecht erfolgen. In einer nächsten Position würde der Phasenanschluss V mit dem positiven Potenzial der Versorgungsspannung 21 und der Phasenanschluss W mit dem Minuspotenzial der Versorgungsspannung 21 verbunden. Entsprechend der Bestromung der Phasenanschlüsse U, V und W in der Tabelle in Fig. 7 erfolgt die Drehkommutierung mit dem Ergebnis, dass der Rotor 7 durch das fortschreitend geschaltete Drehfeld angetrieben wird.

Da immer nur zwei Phasenanschlüsse U, V bzw. W der Anordnung 20 der Feldwicklungen 3, 4, 5 über die entsprechenden Schaltelemente 12 bis 17 mit der Versorgungsspannung 21 verbunden sind, sind die der dritten Phase zugeordneten Schaltelemente offen. Wie in Fig. 3 gezeigt, ist bei einer Bestromung der Feldwicklungen über die Phasenanschlüsse U und W der Phasenanschluss V abgetrennt; die dem Phasenanschluss V zugeordneten Schaltelemente 14 und 15 sind offen.

Der rotierende Rotor induziert aufgrund physikalischer Gesetzmäßigkeiten (Induktionsgesetz) in den Feldwicklungen eine Spannung, die am Phasenanschluss V aufgrund der offenen Schaltelemente 14 und 15 unmittelbar abgegriffen werden kann. Die Amplitude dieser Induktionsspannung U_{G} ist unmittelbar proportional der Drehgeschwindigkeit des Rotors und ist daher ein Maß für die Drehzahl des Rotors7; der Verlauf der Induktionsspannung ist eine Größe für die momentane Drehlage des Rotors 7. Dieses Drehzahlsignal in Form der Generatorspannung U_{G} wird der Steuereinheit 9 zur Verfügung gestellt, damit der Kommutator 10 drehzahlangepasst betrieben werden kann.

Der durch die Anordnung 20 fließende Strom I_{L} bewirkt in den jeweils geschlossenen Schaltelementen einen Spannungsabfall an deren Innenwiderstand. Dieser Spannungsabfall U_{L} kann zwischen einem Phasenanschluss und dem Nullpotenzial abgegriffen werden und ist unmittelbar proportional dem fließenden Strom I_{L} in der Anordnung 20. Im Ausführungsbeispiel ist die Spannung U_{L} am Phasenanschluss W abgegriffen und entspricht dem Spannungsabfall über dem Schaltelement 13. Die Spannung U_{L} dient der Steuereinheit 9 ebenfalls als Betriebssignal des elektrischen Motors und ist etwa proportional der Last. Die Steuereinheit 9 nutzt die Betriebssignale (Generatorspannung U_{G} und Lastspannung U_{L}) zur angepassten Steuerung des Kommutators 10. Zur Verarbeitung der Betriebssignale umfasst die Steuereinheit 9 zweckmäßig einen Mikroprozessor 28.

Abhängig vom Betriebszustand des Elektromotors 1 bzw. von der Drehlage des antreibenden Drehfeldes und der Lage des Rotors 7 kann an jedem Phasenanschluss in einem ersten Betriebsfenster die Generatorspannung und in einem zweiten Betriebsfenster die Lastspannung als Betriebssignal abgegriffen werden. Die Generatorspannung U_{G} ist um mindestens einen zweistelligen Faktor größer als die Lastspannung U_{L}, weshalb nach der Erfindung eine Anpassungsvorrichtung 30, 40 bzw. 50 vorgesehen ist, welche jeweils mit einem Potenzialpunkt des Stromkreises einer Feldwicklung bzw. einem Phasenanschluss U, V, W zugeordnet und an diesem angeschlossen ist. Der Ausgang der Anpassungsvorrichtung 30 ist über eine Signalleitung 33 mit der Steuereinheit 9 verbunden; entsprechend ist der Ausgang der Anpassungsvorrichtung 40 über die Signalleitung 44 und der Ausgang der Anpassungsvorrichtung 50 über die Signalleitung 55 mit der Steuereinheit 9 verbunden.

Jede Anpassungsvorrichtung 30, 40, 50 weist eine erste Anpassungsstufe mit einer hohen Empfindlichkeit und eine zweite Anpassungsstufe mit einer niedrigen Empfindlichkeit auf. Die erste Stufe mit einer hohen Empfindlichkeit ist zur Erfassung und Weiterleitung geringer Eingangsspannungen vorgesehen, während die zweite Anpassungsstufe mit niedriger Empfindlichkeit der Weiterleitung von hohen Eingangsspannungen dient. Die stark unterschiedlichen Spannungen der Betriebssignale U_{L} und U_{G} können durch die Anpassungsvorrichtung 30, 40 bzw. 50 über nur eine Signalleitung bzw. einen Signalanschluss der Steuereinheit 9 zugeführt werden, die bevorzugt einen Mikroprozessor 28 umfasst. Der Mikroprozessor benötigt daher für jeden Phasenanschluss U, V, W nur einen analogen Eingang.

Jede Anpassungsvorrichtung 30, 40, 50 empfängt ein Steuersignal AV-V, AV-W bzw. AV-U von der Steuereinheit 9. Da die Steuereinheit 9 den Kommutator 10 steuert, sind exakt die Zeiten bekannt, in denen z. B. der Anschluss V (Fig. 3) aufgrund der beiden offenen Schaltelemente 14 und 15 von dem Kommutator 10 abgekoppelt ist. Ist der Phasenanschluss V von der Stelleinheit 10 aufgrund der offenen Schaltelemente 14 und 15 abgekoppelt, ist die am Phasenanschluss V abgreifbare Spannung die Generatorspannung U_{G}. Da diese Generatorspannung U_{G} um ein Mehrfaches höher ist als die Lastspannung U_{L}, wird auf der Steuerleitung 31 das Steuersignal AV-V gesendet, welches die Anpassungsvorrichtung 30 auf die zweite Anpassungsstufe mit niedriger Empfindlichkeit umschaltet. Auf der Signalleitung 33 liegt ein der induzierten Spannung U_{G} proportionales Signal U_{S2} an, welches der zulässigen Spannungsbandbreite des analogen Signaleingangs des Mikroprozessors 28 in der Steuereinheit 9 angepasst ist.

Zeitgleich zur Erfassung der aktuellen Generatorspannung U_{G} wird von der Anpassungsvorrichtung 40 das Potenzial des Phasenanschlusses W gegen Masse erfasst. Dieses Potenzial entspricht der am Schaltelement 13 abgefallenen Lastspannung U_{L} und ist eine Größe für den fließenden Laststrom I_{L}. Da der Innenwiderstand des Schaltelementes 13, insbesondere eines elektronischen Leistungsschalters wie eines Thyristors, MOSFETs oder dgl. gering ist, ist die abfallende Spannung sehr klein. Sie liegt im Bereich von Millivolt und wird von der Anpassungsvorrichtung 40 erfasst, die auf ihrer ersten Anpassungsstufe mit hoher Empfindlichkeit arbeitet. Diese erste Anpassungsstufe liegt vor, da das Steuersignal AV-W auf der Steuerleitung 41 ausbleibt. Das Steuersignal zur Umschaltung einer Anpassungsvorrichtung 30, 40 bzw. 50 wird immer dann gesendet, wenn der entsprechende Phasenanschluss U, V, W über beide Leistungsschalter von der Versorgungsspannung 21 getrennt ist. Da der Phasenanschluss W über den Leistungsschalter 13 mit dem Minuspotenzial der Versorgungsspannung 21 verbunden ist, erfolgt auf der Steuerleitung 41 kein Steuersignal zur Umschaltung der Anpassungsvorrichtung. Gleiches gilt für den Phasenanschluss U; auch dieser verbleibt in der ersten Anpassungsstufe mit hoher Empfindlichkeit.

Das Ausgangssignal der Anpassungsstufe 40 auf der Signalleitung 44 ist ein verstärktes Signal U_{S1}.

Wird das Drehfeld weitergeschaltet, werden entsprechend der dann basierend auf der Tabelle nach Fig. 7 ausgeführten Schalterstellungen des Kommutators 10 die Anpassungsvorrichtungen 30, 40, 50 in der ersten Anpassungsstufe belassen oder - ist ein Phasenanschluss von der Versorgungsspannung 21 vollständig abgekoppelt - auf die zweite Anpassungsstufe umgeschaltet.

In den Figuren 4 und 5 sind am Beispiel der Anpassungsvorrichtung 30 mögliche Ausfuhrungsformen wiedergegeben.

Im Ausführungsbeispiel nach Fig. 4 umfasst die Anpassungsvorrichtung 30 einen Operationsverstärker 25, zwischen dessen analogen Eingängen die an dem Phasenanschluss V abgreifbaren Spannungen U_{L} und U_{G} aufgeschaltet sind. Der Operationsverstärker 25 ist z. B. zum Verstärken der Lastspannung U_{L} ausgelegt, um auf der Signalleitung 33 ein proportionales Betriebssignal U_{S1} abzugeben. Dies entspricht der ersten Anpassungsstufe mit hoher Empfindlichkeit.

Liegt am Phasenanschluss V das um ein Mehrfaches höhere Betriebssignal der Generatorspannung U_{G} an, wird der analoge Eingang des Operationsverstärkers 25 über einen Widerstand 32 eines Spannungsteilers 26 gegen Masse geschaltet. Der Spannungsteiler 26 wird über einen insbesondere elektronischen Schalter 27 ein- bzw. ausgeschaltet, wobei der elektronische Schalter mit der Steuerleitung 31 verbunden ist, auf der das Steuersignal AV-V gesendet wird. Das Steuersignal AV-V liegt immer dann an, wenn die dem Phasenanschluss V zugeordneten Schaltelemente 14 und 15 offen sind, also der Rotor 7 eine bestimmte Drehlage hat.

Ist der Spannungsteiler 26 eingeschaltet, entspricht dies der zweiten Anpassungsstufe mit niedriger Empfindlichkeit; ist der Spannungsteiler 26 ausgeschaltet, entspricht dies der ersten Anpassungsstufe mit hoher Empfindlichkeit. Bei eingeschaltetem Spannungsteiler 26 liegt auf der Signalleitung 33 das die Generatorspannung wiedergebende Betriebssignal U_{S2} an.

In Weiterbildung der Anpassungsvorrichtung 30 kann parallel zum Spannungsteiler 26 ein weiterer Spannungsteiler 26' vorgesehen sein, wie in Fig. 4 strichliert wiedergegeben ist. Der Spannungsteiler 26' umfasst zwei Widerstände 32', deren Gesamtwert größer als der des Widerstands 32 des Spannungsteilers 26 ist. Schaltet der elektronische Schalter 27' durch, entspricht dies einer dritten Anpassungsstufe der Anpassungsvorrichtung 30, also einer dritten Empfindlichkeitsstufe. Auf diese Weise können mehrere Anpassungsstufen ausgebildet werden, die über die entsprechende Steuerleitung 31 bzw. 31' ein- bzw. ausgeschaltet werden.

## Patentansprüche

1. Elektromotor als Antriebsmotor in einem Arbeitsgerät (99), insbesondere in einem handgeführten Arbeitsgerät wie einer elektrischen Motorkettensäge, einer elektrischen Heckenschere, einem elektrischen Freischneider, einem elektrischen Blasgerät, einem elektrischen Trennschleifer oder dgl., mit einer zum Antrieb des Rotors (7) vorgesehenen Anordnung aus Wicklungen (3, 4, 5), die mit einer Energiequelle (11) derart verbunden sind, dass ein den Rotor (7) antreibendes Drehmoment (24) wirkt, wobei der jeweilige Stromkreis einer Wicklung (3, 4, 5) einen Potenzialpunkt (100) aufweist, **gekennzeichnet dadurch, daß** die Spannung (U_{L}, U_{G}) des Potentialpunktes (100) über eine Anpassungsvorrichtung (30, 40, 50) einem Eingang einer Auswerteeinheit zugeführt ist, wobei die Anpassungsvorrichtung (30, 40, 50) in zwei umschaltbaren Anpassungsstufen betreibbar ist, und mit einer in Abhängigkeit von der Drehlage des Rotors (7) arbeitenden Ansteuerschaltung (90) für die Anpassungsvorrichtung (30, 40, 50), wobei die Ansteuerschaltung (90) in Abhängigkeit der Drehlage des Rotors (7) des Elektromotors (1) die Anpassungsvorrichtung (30, 40, 50) in die erste Anpassungsstufe hoher Empfindlichkeit oder in die zweite Anpassungsstufe niedriger Empfindlichkeit schaltet.

2. Elektromotor nach Anspruch 1,
**dadurch gekennzeichnet, dass** die Drehlage des Rotors (7) aus einem Signal eines Drehlagesensors (80) ermittelt wird, der am Elektromotor (1) angeordnet ist.

3. Elektromotor nach Anspruch 1,
**dadurch gekennzeichnet, dass** die Drehlage des Rotors (7) über den Kommutator (10, 66) des Elektromotors (1) ermittelt wird.

4. Elektromotor nach Anspruch 3,
**dadurch gekennzeichnet, dass** die Drehlage des Rotors (7) aus den Steuersignalen eines elektronischen Kommutators (10) ermittelt wird.

5. Elektromotor nach Anspruch 4,
**dadurch gekennzeichnet, dass** die Ansteuerschaltung (90) Teil des elektronischen Kommutators (10) ist.

6. Elektromotor nach Anspruch 1,
**dadurch gekennzeichnet, dass** die Drehlage des Rotors (7) aus der am Potenzialpunkt (100) abgegriffenen generatorischen Spannung (U_{G}) ermittelt wird.

7. Elektromotor nach einem der Ansprüche 1 bis 6,
**dadurch gekennzeichnet, dass** die Anordnung (20) der Wicklungen (3, 4, 5) mindestens zwei Phasenanschlüsse (U, V, W) aufweist, und die Phasenanschlüsse der Wicklungen (3, 4, 5) über einen Kommutator (10) nacheinander mit der Energiequelle (11) derart verbunden sind, dass ein fortschreitendes Drehfeld erzeugt ist, wobei an einem freien Phasenanschluss (V, W, U) die generatorische Spannung (U_{G}) des drehenden Elektromotors (1) anliegt und der Strom in der das Drehfeld erzeugenden Wicklung (3, 4, 5) als an einem Widerstand abfallende Spannung erfasst wird, wobei diese Spannungen (U_{L}, U_{G}) als Betriebssignale der Auswerteeinheit zugeführt sind.

8. Elektromotor nach Anspruch 7,
**dadurch gekennzeichnet, dass** die Anordnung (20) der Wicklungen (3, 4, 5) drei Phasenanschlüsse (U, V, W) aufweist, und je zwei Phasenanschlüsse der Wicklungen (3, 4, 5) über einen elektronisch gesteuerten Kommutator (10) nacheinander mit der Energiequelle (11) derart verbunden sind, dass das fortschreitende Drehfeld erzeugt ist, wobei zeitgleich ein erster Phasenanschluss (U, V, W) über ein erstes Schaltelement (12, 13, 14, 15, 16, 17) mit der Lowside der Energiequelle (11) verbunden ist und an dem freien dritten Phasenanschluss (V, W, U) die generatorische Spannung (U_{G}) des drehenden Elektromotors (1) anliegt und zur Erfassung des Stroms in der das Drehfeld erzeugenden Wicklung (3, 4, 5) der Spannungsabfall (U_{L}) über einen der die Schaltelemente (12 bis 17) mit der Energiequelle (11) verbindenden Phasenanschlüsse (U, V, W) an einem Potenzialpunkt (100) abgreifbar ist, wobei diese Spannungen (U_{L}, U_{G}) als Betriebssignale der Auswerteeinheit zugeführt sind.

9. Elektromotor nach Anspruch 8,
**dadurch gekennzeichnet, dass** der Potentialpunkt (100) durch einen Phasenanschluss (V, W, U) gebildet ist.

10. Elektromotor nach Anspruch 8 oder 9,
**dadurch gekennzeichnet, dass** die Anpassungsvorrichtung (30, 40, 50) bei Anliegen eines von einer Steuereinheit (9) an den elektronischen Kommutator (10) abgegebenen Steuersignals (AV-V, AV-W, AV-U) aus einer ersten Anpassungsstufe in eine zweite Anpassungsstufe umgeschaltet ist, wobei das Steuersignal in Abhängigkeit des Schaltzustandes der Schaltelemente (12 bis 17) ausgelöst ist, die zwischen den Phasenanschlüssen (U, V, W) und der Energiequelle (11) angeordnet sind.

11. Elektromotor nach Anspruch 10,
**dadurch gekennzeichnet, dass** die mit einem Phasenanschluss (U, V, W) verbundene Anpassungsvorrichtung (30, 40, 50) immer dann auf die zweite Anpassungsstufe umgeschaltet ist, wenn die mit dem Phasenanschluss (U, V, W) verbundenen Schaltelemente (12 bis 17) offen sind, an dem die Anpassungsvorrichtung (30, 40, 50) angeschlossen ist.

12. Elektromotor nach einem der Ansprüche 1 bis 11,
**dadurch gekennzeichnet, dass** die Anpassungsvorrichtung ein Spannungsteiler (26) ist, und der Spannungsteiler (26) über einen Schalter (27) ein- und ausschaltbar ist.

13. Elektromotor nach einem der Ansprüche 1 bis 12,
**dadurch gekennzeichnet**, das die Anpassungsvorrichtung (30, 40, 50) einen Operationsverstärker (25) umfasst, auf dessen Eingang die Spannung (U_{L}, U_{G}) des Potenzialpunktes (100) aufgeschaltet ist.

14. Elektromotor nach Anspruch 13,
**dadurch gekennzeichnet, dass** die Spannung (U_{L}, U_{G}) des Potenzialpunktes (100) der Anpassungsvorrichtung (30, 40, 50) über einen analogen Eingang aufgeschaltet ist.

15. Elektromotor nach einem der Ansprüche 1 bis 14,
**dadurch gekennzeichnet, dass** die Auswerteeinheit einen Mikroprozessor (28) umfasst und die Anpassungsvorrichtung (30, 40, 50) in dem Mikroprozessor (28) integriert ist.

16. Elektromotor nach einem der Ansprüche 1 bis 15,
**dadurch gekennzeichnet, dass** die Energiequelle ein Akkublock (60) ist, insbesondere ein chemisch auf Lithium basierender Akkublock (60) ist.

## Claims

1. Electric motor used as a drive motor in a working implement (99), in particular in a hand-guided working implement such as an electric motor-driven chainsaw, an electric hedge clipper, an electric string mower, an electric blower, an electric angle grinder or the like, with an assembly of windings (3, 4, 5) provided for driving the rotor (7), which windings (3, 4, 5) are connected to an energy source (11) in such a way that a torque driving the rotor (7) takes effect, wherein the respective circuit of a winding (3, 4, 5) has a potential point (100),
**characterised in that** the voltage (U_{L}, U_{G}) of the potential point (100) is fed to an input of an evaluation unit via a matching device (30, 40, 50), wherein the matching device (30, 40, 50) can be operated in two switchable matching stages, and with a control circuit (90) operating as a function of the rotary position of the rotor (7) for the matching device (30, 40, 50), wherein the control circuit (90) switches the matching device (30, 40, 50) into the first matching stage of high sensitivity or the second matching stage of low sensitivity as a function of the rotary position of the rotor (7) of the electric motor (1).

2. Electric motor according to claim 1,
**characterised in that** the rotary position of the rotor (7) is detected from a signal of a rotary position sensor (80) located on the electric motor (1).

3. Electric motor according to claim 1,
**characterised in that** the rotary position of the rotor (7) is detected by way of the commutator (10, 66) of the electric motor (1).

4. Electric motor according to claim 3,
**characterised in that** the rotary position of the rotor (7) is detected from the control signals of an electronic commutator (10).

5. Electric motor according to claim 4,
**characterised in that** the control circuit (90) is a part of the electronic commutator (10).

6. Electric motor according to claim 1,
**characterised in that** the rotary position of the rotor (7) is detected from the regenerative voltage (U_{G}) tapped at the potential point (100).

7. Electric motor according to any of claims 1 to 6,
**characterised in that** the assembly (20) of the windings (3, 4, 5) has at least two phase connections (U, V, W) and the phase connections of the windings (3, 4, 5) are connected by way of a commutator (10) consecutively to the energy source (11) in such a way that a progressive rotary field is generated, wherein the regenerative voltage (U_{G}) of the rotating electric motor (1) is applied to a free phase connection (U, V, W) and the current in the winding (3, 4, 5) generating the rotary field is detected as a voltage dropping at a resistor, wherein the voltages (U_{L}, U_{G}) are fed to the evaluation unit as operating signals.

8. Electric motor according to claim 7,
**characterised in that** the assembly (20) of the windings (3, 4, 5) has three phase connections (U, V, W) and two phase connections each of the windings (3, 4, 5) are connected by way of an electronically controlled commutator (10) consecutively to the energy source (11) in such a way that the progressive rotary field is generated, wherein simultaneously a first phase connection (U, V, W) is connected to the low side of the energy source (11) by way of a first switching element (12, 13, 14, 15, 16, 17) and the regenerative voltage (U_{G}) of the rotating electric motor (1) is applied to the free third phase connection (U, V, W) and, for the detection of the current in the winding (3, 4, 5) generating the rotary field, the voltage drop (U_{L}) can be picked up at a potential point (100) by way of one of the phase connections (U, V, W) connecting the switching elements (12 to 17) to the energy source (11), wherein these voltages (U_{L}, U_{G}) are fed to the evaluation unit as operating signals.

9. Electric motor according to claim 8,
**characterised in that** the potential point (100) is represented by a phase connection (U, V, W).

10. Electric motor according to claim 8 or 9,
**characterised in that** the matching device (30, 40, 50) is switched from a first matching stage to a second matching stage on the application of a control signal (AV-V, AV-W, AV-U) output by a control unit (9) to the electronic commutator (10), wherein the control signal is triggered as a function of the switching state of the switching elements (12 to 17) located between the phase connections (U, V, W) and the energy source (11).

11. Electric motor according to claim 10,
**characterised in that** the matching device (30, 40, 50) connected to a phase connection (U, V, W) is switched to the second matching stage whenever the switching elements (12 to 17) connected to that phase connection (U, V, W) to which the matching device (30, 40, 50) are connected are open.

12. Electric motor according to any of claims 1 to 11,
**characterised in that** the matching device is a voltage divider (26) and the voltage divider (26) can be switched on and off by way of a switch (27).

13. Electric motor according to any of claims 1 to 12,
**characterised in that** the matching device (30, 40, 50) comprises an operational amplifier (25), to the input of which the voltage (U_{L}, U_{G}) of the potential point (100) is applied.

14. Electric motor according to claim 13,
**characterised in that** the voltage (U_{L}, U_{G}) of the potential point (100) is applied to the matching device (30, 40, 50) via an analogue input.

15. Electric motor according to any of claims 1 to 14,
**characterised in that** the evaluation unit comprises a microprocessor (28) and the matching device (30, 40, 50) is integrated into the microprocessor (28).

16. Electric motor according to any of claims 1 to 15,
**characterised in that** the energy source is a battery pack (60), in particular a battery pack (60) which is chemically based on lithium.

## Revendications

1. Moteur électrique comme moteur d'entraînement dans un appareil de travail (99), en particulier dans un appareil de travail à main tel qu'une tronçonneuse électrique à chaîne, un taille-haie électrique, une débroussailleuse électrique, une souffleuse électrique, une tronçonneuse électrique à meule ou autre, avec un dispositif, prévu pour entraîner le rotor (7), composé d'enroulements (3, 4, 5) qui sont reliés à une source d'énergie (11) de telle sorte qu'un couple (24) entraînant le rotor (7) agisse, dans lequel le circuit électrique de chaque enroulement (3,4, 5) présente un point de potentiel (100),
**caractérisé en ce que** la tension (U_{L}, U_{G}) du point de potentiel (100) est amenée via un dispositif d'adaptation (30, 40, 50) jusqu'à une entrée d'une unité d'analyse, dans lequel le dispositif d'adaptation (30, 40, 50) est apte à fonctionner dans deux niveaux d'adaptation commutables, et avec un circuit de commande (90) fonctionnant en fonction de la position de rotation du rotor (7), pour le dispositif d'adaptation (30, 40, 50), dans lequel le circuit de commande (90), en fonction de la position de rotation du rotor (7) du moteur électrique (1), fait passer le dispositif d'adaptation (30, 40, 50) au premier niveau d'adaptation, de haute sensibilité, ou au second niveau d'adaptation, de faible sensibilité.

2. Moteur électrique selon la revendication 1,
**caractérisé en ce que** la position de rotation du rotor (7) est déterminée à partir d'un signal d'un capteur de position de rotation (80) qui est disposé sur le moteur électrique (1).

3. Moteur électrique selon la revendication 1,
**caractérisé en ce que** la position de rotation du rotor (7) est déterminée par le commutateur (10, 66) du moteur électrique (1).

4. Moteur électrique selon la revendication 3,
**caractérisé en ce que** la position de rotation du rotor (7) est déterminée à partir des signaux de commande d'un commutateur électronique (10).

5. Moteur électrique selon la revendication 4,
**caractérisé en ce que** le circuit de commande (90) fait partie du commutateur électronique (10).

6. Moteur électrique selon la revendication 1,
**caractérisé en ce que** la position de rotation du rotor (7) est déterminée à partir de la tension génératrice (U_{G}) prélevée au point de potentiel (100).

7. Moteur électrique selon l'une des revendications 1 à 6,
**caractérisé en ce que** la disposition (20) des enroulements (3, 4, 5) comporte au moins deux raccordements de phase (U, V, W), et les raccordements de phase des enroulements (3, 4, 5) sont reliés à la source d'énergie (11) les uns après les autres par un commutateur (10) de telle sorte qu'un champ tournant progressif soit généré, dans lequel à un raccordement de phase libre (V, W, U) est appliquée la tension génératrice (U_{G}) du moteur électrique (1) tournant, et le courant dans l'enroulement (3, 4, 5) générant le champ tournant est détecté sous la forme d'une chute de tension au niveau d'une résistance, dans lequel ces tensions (U_{L}, U_{G}) sont amenées sous la forme de signaux de fonctionnement jusqu'à l'unité d'analyse.

8. Moteur électrique selon la revendication 7,
**caractérisé en ce que** la disposition (20) des enroulements (3, 4, 5) comporte trois raccordements de phase (U, V, W), et deux raccordements de phase des enroulements (3, 4, 5) sont reliés à la source d'énergie (11) les uns après les autres par un commutateur à commande électronique (10) de telle sorte que le champ tournant progressif soit généré, dans lequel simultanément un premier raccordement de phase (U, V, W) est relié par un premier élément de commutation (12, 13, 14, 15, 16, 17) au côté bas de la source d'énergie (11), et au troisième raccordement de phase libre (V, W, U) est appliquée la tension génératrice (U_{G}) du moteur électrique (1) tournant, et pour la détection du courant dans l'enroulement (3, 4, 5) générant le champ tournant la chute de tension (U_{L}) est apte à être prélevée à un point de potentiel (100) par l'un des raccordements de phase (U, V, W) reliant les éléments de commutation (12 à 17) à la source d'énergie (11), dans lequel ces tensions (U_{L}, U_{G}) sont amenées sous la forme de signaux de fonctionnement jusqu'à l'unité d'analyse.

9. Moteur électrique selon la revendication 8,
**caractérisé en ce que** le point de potentiel (100) est formé par un raccordement de phase (V, W, U).

10. Moteur électrique selon la revendication 8 ou 9,
**caractérisé en ce que** le dispositif d'adaptation (30, 40, 50), en présence d'un signal de commande (AV-V, AV-W, AV-U) envoyé par une unité de commande (9) au commutateur électronique (10), passe d'un premier niveau d'adaptation à un second niveau d'adaptation, dans lequel le signal de commande est déclenché en fonction de l'état de commutation des éléments de commutation (12 à 17) qui sont disposés entre les raccordements de phase (U, V, W) et la source d'énergie (11).

11. Moteur électrique selon la revendication 10,
**caractérisé en ce que** le dispositif d'adaptation (30, 40, 50) relié à un raccordement de phase (U, V, W) passe toujours au second niveau d'adaptation quand sont ouverts les éléments de commutation (12 à 17) reliés au raccordement de phase (U, V, W) auquel est raccordé le dispositif d'adaptation (30, 40, 50).

12. Moteur électrique selon l'une des revendications 1 à 11,
**caractérisé en ce que** le dispositif d'adaptation est un diviseur de tension (26), et le diviseur de tension (26) est apte à être mis en marche et arrêté par un interrupteur (27).

13. Moteur électrique selon l'une des revendications 1 à 12,
**caractérisé en ce que** le dispositif d'adaptation (30, 40, 50) comprend un amplificateur opérationnel (25) à l'entrée duquel est transmise la tension (U_{L}, U_{G}) du point de potentiel (100).

14. Moteur électrique selon la revendication 13,
**caractérisé en ce que** la tension (U_{L}, U_{G}) du point de potentiel (100) du dispositif d'adaptation (30, 40, 50) est transmise par une entrée analogique.

15. Moteur électrique selon l'une des revendications 1 à 14,
**caractérisé en ce que** l'unité d'analyse comprend un microprocesseur (28), et le dispositif d'adaptation (30, 40, 50) est intégré dans le microprocesseur (28).

16. Moteur électrique selon l'une des revendications 1 à 15,
**caractérisé en ce que** la source d'énergie est un bloc de batteries (60), en particulier un bloc de batteries (60) chimiquement à base de lithium.
